# EUROPEAN PATENT SPECIFICATION

(11) **EP 3 697 223 B1**
(45) Date of publication and mention of the grant of the patent: **04.05.2022**
(21) Application number: 18804393.9
(22) Date of filing: 19.10.2018
(51) Int. Cl.: A21B 5/02

(54) **SYSTEM FOR AUTOMATED PRODUCTION OF PANIGACCI**
SYSTEM FÜR DIE AUTOMATISIERTE HERSTELLUNG VON PANIGACCI
SYSTÈME DE PRODUCTION AUTOMATIQUE DE PANIGACCI

(30) Priority: 20.10.2017 IT 201700118798
(43) Date of publication of application: 26.08.2020
(73) Proprietor: F.lli Venturini S.r.l., 54010 Podenzana (MS) (IT)
(72) Inventor: VENTURINI, Nicola, 54026 Mulazzo (MS) (IT); VENTURINI, Luca, 19038 Sarzana (SP) (IT); VENTURINI, Andrea, 54026 Mulazzo (MS) (IT)
(74) Representative: Celestino, Marco
(86) International application number: PCT/IB2018/058166
(87) International publication number: WO 2019/077582

(56) References cited:
- WO-A1-95/03713
- WO-A1-2017/068558
- GB-A- 226 793
- US-A- 2 859 713
- Da Gambin: "Il Panigaccio di Podenzana secondo la ricetta originale", YouTube, 30 September 2013 (2013-09-30), pages 1-1, XP054976606, Retrieved from the Internet: URL:https://www.youtube.com/watch?v=WWariD iZX6Y [retrieved on 2016-06-20]

## Description

### Field of the invention

The present invention relates to the food industry.

In particular, the invention relates to an apparatus for the automated production of panigacci, typical product of Lunigiana.

### Description of the prior art

As known, the panigacci are a type of round bread made starting from a fluid dough, made with water, flour and salt, which is cooked between clay dishes, so-called "testi", previously heated at high temperatures. Panigacci bake in the dishes in a few minutes and don't need yeast.

More precisely, instead of baking in the oven, the dough is poured in red-hot dishes already extracted from the oven or from fire. In any dish a dose of dough is poured and immediately after is overlaid another dish, on which in turn other dough is poured and overlaid over yet another dish, and so on up to form a stack of 10-20 dishes interspersed with dough.

Thus every dish crushes the underlying dough until it reaches a nearly constant thickness and round shape. The dough standing between the hot dishes cooks in minutes on both sides, forming panigacci. The stack is then dismantled and the panigacci are detached from the dishes with a blade or vane. They are traditionally served in baskets and are used as a relish for meats and soft cheese, or even desserts.

It is desirable for the restaurants and cafes to create a large number of panigacci to serve to customers freshly cooked, when they have the best flavor and aroma. However, the cooking technique does not allow to achieve a high number of panigacci, with waiting times that are not negligible for customers.

For faster heating the dishes, it is known to use a carousel grid, arranged in an open oven or over a bed of embers or over a flame. In this way, by turning the grid, the cold dishes are introduced in the oven and the hot dishes are extracted bringing them to an external position from where they can be easily picked up without burning.

However, the terracotta dishes are placed on the grid and always extracted one by one, with difficulty to heat them homogeneously, since the residence time to the flame can vary considerably from dish to dish.

Another problem is the dosing of the right amount of batter to put in the terracotta dishes, which is normally done by hand. To put too much batter means to make a higher panigaccio, but sometimes raw inside. Too little can result in a too thin and therefore dry or burned panigaccio. For this reason, to every pile of terracotta dishes that is "disassembled", we often get panigacci sometimes very different from each other.

A further problem is that the terracotta dishes extracted from the oven or live fire are sometimes overheated, and often not all at the same temperature. If a terracotta dish is too hot, a burnt panigaccio may result. If the terracotta dishes in the pile are at very different temperatures, there may be raw or overcooked panigacci, if not burnt.

It is therefore desirable to solve the aforementioned problems. On the other hand, it is desirable to keep the panigacci cooking in the original way, in order not to distort a traditional product.

In the document GB226793 an industrial apparatus for the preparation of Waffles and other confectionery products is described which makes it possible to automate the production process, by means of two conveyor belts which allow to measure the batter in the mold, to couple it with a countermold and to cook the batter.

However, even using terracotta dishes instead of molds, this system would not be absolutely suitable for the production of panigacci. In fact, in GB226793 the cooking of the food product takes place by means of burners arranged under the conveyor belt. This would compromise the traditional cooking which must instead take place by means of hot terracotta dishes that have not to be subject to a further heating during cooking. Only in this way, in fact, it is possible to guarantee a homogeneous cooking on both surfaces of the panigaccio, giving the product the typical traditional flavour. The cooking provided in GB226793 would instead be inhomogeneous, both due to the heating discontinuity that would occur during the conveyor belt path, due to the fact that the terracotta dishes would pass on areas with higher heat and lower heat, both for the fact that the terracotta dishes would be heated only in one direction, providing heterogeneity of heating to the two surfaces of the panigaccio.

### Summary of the invention

It is therefore a feature of the present invention to provide an apparatus for making panigacci for carrying out the steps of dosing the batter, stacking the terracotta dishes and cooking the panigacci in a completely automatic way.

It is also a feature of the present invention to provide such an apparatus which allows the production of panigacci in a continuous cycle much more rapidly than in the prior art.

It is still a feature of the present invention to provide such an apparatus that allows to have a more homogeneous and digestible cooking of the panigacci with respect to the known art.

These and other objects are achieved by an apparatus for the automated production of panigacci comprising:
- at least a first conveyor belt arranged to rotate about a first plurality of rollers, said first conveyor belt comprising a first outer surface and a first plurality of terracotta dishes, each terracotta dish of the first plurality being constrained to the first outer surface;
- at least a second conveyor belt arranged to rotate about a second plurality of rollers, said second conveyor belt comprising a second outer surface and a second plurality of terracotta dishes, each terracotta dish of the second plurality being constrained at the second outer surface;
- an oven arranged to be crossed by the first conveyor belt and by the second conveyor belt for heating the first and the second plurality of terracotta dishes;
- a doser arranged to pour a dose of batter on at least one terracotta dish of the first plurality;
said apparatus comprising an area of cooking, external to the oven, wherein a portion of length ***L*** of the first conveyor belt and a portion of length ***L*** of the second conveyor belt are constantly at a mutual distance equal to a predetermined value ***D***, said apparatus being configured in such a way that in the area of cooking each terracotta dish of the first plurality both aligned with a corresponding terracotta dish of the second plurality, said predetermined value ***D*** being such that a dose of batter interposed between two terracotta dishes aligned to each other is subject to a pressure ***P*** in such a way that to allow its squeezing and cooking.

In this way, the process of stacking the terracotta dishes and of cooking the panigacci is automated, allowing a continuous cycle production, while keeping the traditional recipe intact.

Advantageously, the terracotta dishes of the first plurality and the terracotta dishes of the second plurality are constrained, respectively, to the first outer surface and at the second outer surface in a removable way.

This way, broken or too dirty terracotta dishes can be easily substituted.

In particular, the interlocking interface between terracotta dish and conveyor belt can be made of Teflon or printed directly in terracotta. Alternatively, the interface can be a vacuum suction cup resistant to high temperatures.

In particular, the terracotta dishes of the first plurality and the terracotta dishes of the second plurality are constrained, respectively, to the first outer surface and to the second outer surface by means of elastic elements, in particular springs having elastic constant ***k*.**

This way, by suitably adjusting the elastic constant ***k*,** it is possible to adjust the pressure ***P*** exerted on the batter located between the terracotta dishes.

Advantageously, the doser is adapted to pour a dose of batter on at least one terracotta dish of the first plurality at an area of pouring arranged at the entrance of the area of cooking.

Advantageously, a kneading machine is also provided arranged to prepare the batter and comprising dispensers of water, salt and flour.

In particular, the kneading machine can comprise a densimeter arranged to keep constant the density of the doses of batter. Alternatively, the kneading machine is operated by the control unit to provide a constant density to the doses of batter.

In particular, a first brush and a second brush are provided arranged to clean, respectively, the terracotta dishes of the first plurality and the terracotta dishes of the second plurality at the outlet of the area of cooking. This way, the terracotta dishes can be used in a continuous cycle.

Advantageously, a freezer is provided arranged to freeze the panigacci exiting from the area of cooking. This way, the frozen panigacci are already ready for sale on an industrial scale.

Alternatively, a vacuum creation device is provided for inserting the panigacci leaving the cooking area and sealing them in a vacuum container.

In particular, the oven is an infrared gas oven.

Advantageously, a control unit for is provided adjusting the speed ***v*** with which the first and the second conveyor belt move.

In particular, the control unit is configured in such a way that the first conveyor belt and the second conveyor belt cross said area of cooking with a speed *v* ≅ *^{L}*/*ₜ,* where ***t*** ≅ 60*s.*

In particular, the control unit is adapted to adjust the speed *v* in such a way that the terracotta dishes leave the oven at a temperature *T* = 315° ± 25°.

This way, there is a homogeneous cooking and that provides high digestibility to the panigaccio, while preserving the flavour of the traditional preparation.

The control unit therefore provides the possibility of entering data concerning the power of the oven and the length of the conveyor belts inside the oven, i.e. the space that the terracotta dishes travel in the oven. Having this information, the control unit can calculate the speed at which the conveyor belts must be moved in order to obtain terracotta dishes at the desired temperature at the output of the oven.

This allows terracotta dishes to be output from the oven always at the desired temperature, and so it does not need a temperature sensing device and, above all, it does not need to further heat the terracotta dishes at an insufficient temperature or to cool the terracotta dishes cool at too high a temperature, which would be incompatible with the automated production carried out by the apparatus of the present invention.

Advantageously, it is possible to arrange several conveyor belts in parallel, so as to allow a greater production of panigacci per minute.

### Brief description of the drawings

Further characteristic and/or advantages of the present invention are more bright with the following description of an exemplary embodiment thereof, exemplifying but not limitative, with reference to the attached drawings in which:
- Fig. 1 shows an exemplary embodiment of the apparatus for the automated production of panigacci, according to the present invention;
- Fig. 2 shows top plan view of a first exemplary embodiment of the oven;
- Fig. 3 shows top plan view of a second exemplary embodiment of the oven;
- Fig. 4A shows a side view of a possible system of quick hanging and release of the terracotta dishes by the first conveyor belt;
- Fig. 4B shows a side view of a possible system of quick hanging and release of the terracotta dishes by the second conveyor belt.

### Description of a preferred exemplary embodiment

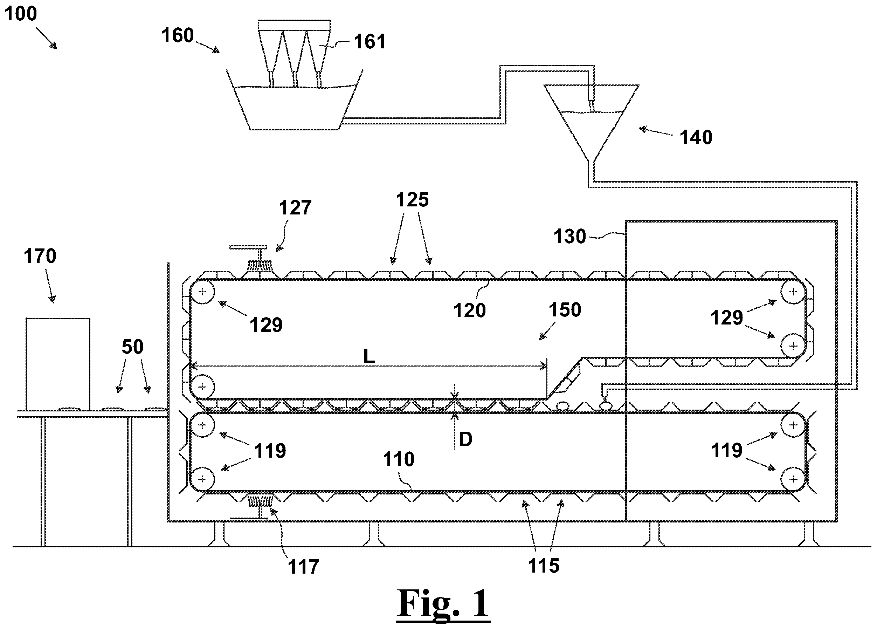

With reference to Fig. 1, an apparatus 100 for the automated production of panigacci, according to the present invention, comprises a first conveyor belt 110 arranged to rotate about a first plurality of rollers 119 and a second conveyor belt 120 arranged to rotate about a second plurality of rollers 129.

To the respective external surfaces of the conveyor belts 110 and 120 are constrained in a removable way a first and a second plurality of terracotta dishes 115 and 125. In particular, as shown in the figure, the terracotta dishes 115 are constrained in order to have the concavity towards the outside of the conveyor belt 110, whereas the terracotta dishes 125 are constrained in order to have the concavity towards the inside of the conveyor belt 120.

The apparatus 100 also comprises an oven 130 arranged to be crossed by the conveyor belts 110 and 120 for heating the respective terracotta dishes 115 and 125 up to a temperature usually about *T* = 315° ± 25°.

The apparatus 100 comprises then a doser 140 arranged to pour a dose of batter on the terracotta dishes 115 constrained to the first conveyor belt 115. In particular, the doser pours the dose of batter on the terracotta dishes 115 at an area of pouring arranged at the entrance of an area of cooking 150.

The area of cooking 150 is the zone in which a portion of length *L* of the first conveyor belt 110 and a portion of length *L* of the second conveyor belt 120 is located at a mutual distance equal to a predetermined value *D.* Furthermore, the apparatus 100 is configured in such a way that at the area of cooking 150 each terracotta dish 115 is aligned with a corresponding terracotta dish 125. This way, when the terracotta dishes 115 and 125 enter in the area of cooking 150 there is a matching adapted to generate a pressure *P* on the dose of batter located between of them, allowing its squeezing and cooking in a completely automatic way.

In the exemplary embodiment of Fig. 1, two brush means 117 and 127 are also provided arranged to clean the terracotta dishes 115 and 125 at the outlet of the area of cooking 150, thus allowing to the terracotta dishes of being used in a continuous cycle.

Advantageously, the apparatus 100 provides then a kneading machine 160 arranged to prepare the batter and comprising dispensers 161 of water, salt and flour.

In addition a freezer or a deep freeze 170 can also be provided arranged to freeze the panigacci 50 at the outlet of the area of cooking 150.

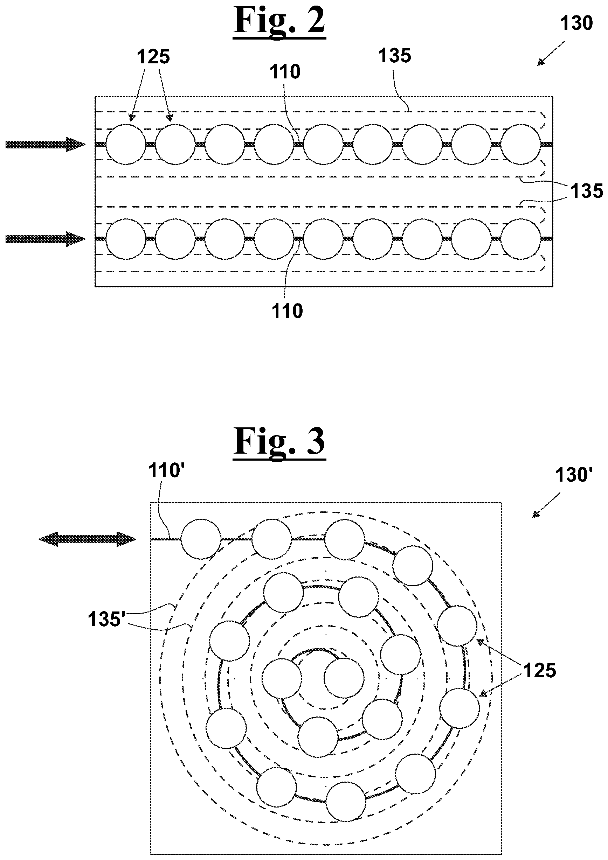

With reference even at Fig. 2, in a possible exemplary embodiment, the oven 130 comprises at least one resistance 135 of tubular shape that extends in a direction parallel to the conveying direction of the conveyor belts 110 and 120. With respect to the ovens of the prior art, which usually have the resistance arranged orthogonally to the conveying direction of the conveyor belt, this exemplary embodiment of the oven 130 determines a more homogeneous heating of the terracotta dishes 125, since along all the path of the oven, the temperature at which the terracotta dishes 125 are exposed remains constant.

As shown, the conveyor belts 110 can also be two, arranged parallel to each other, in order to increase the number of terracotta dishes 125 heated at the same time.

In Fig. 3 an alternative exemplary embodiment of the invention is shown, where the conveyor belt 110, and so the conveyor belt 120, which passes through oven 130 is spiral-shaped.

As shown by the two-way arrow, the conveying direction of the terracotta dishes can go by the centre outwards or vice-versa according to the needs. Furthermore, between the centre and the outer of the spiral there can be a difference in height.

This particular spiral shape determines a longer path of the terracotta dishes in the oven, under a same external size of the oven itself. This way, under a same outer encumbrance, the oven 130 of Fig. 2 allows to reduce the heating power necessary to cause the terracotta dishes 125 to come out at the predetermined temperature, with energy and money saving. Alternatively, under a same power of the oven, it is possible to reduce the external size of the oven, allowing to place the apparatus in areas not enough wide for the solution of Fig. 2.

As shown in Fig. 3, an exemplary embodiment of the oven 130' comprises resistances 135' with circular shape arranged in a concentric way. This solution allows the same heating homogeneity of the terracotta dishes 125 obtained in the embodiment of Figure 2.

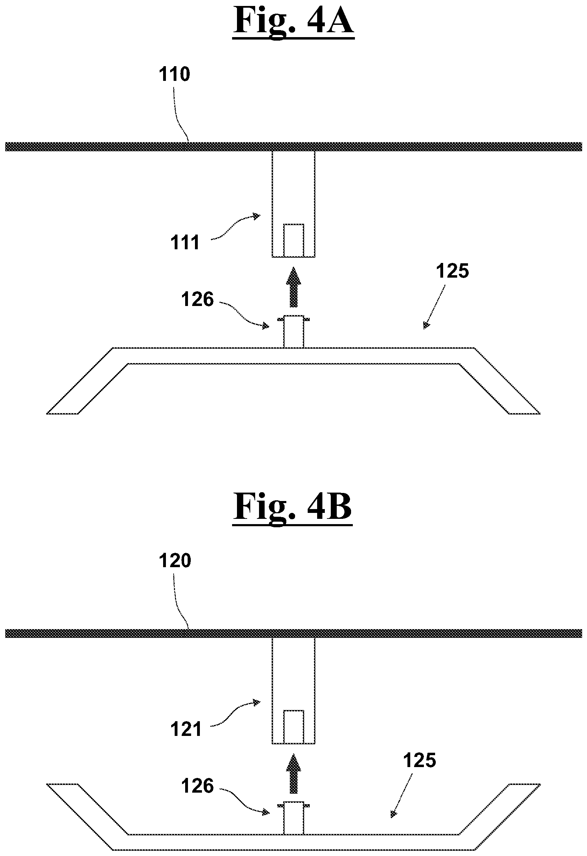

Figs. 4A and 4B show a possible system of quick hanging and release of the terracotta dishes 125, respectively, by the first and by the second conveyor belt 110 and 120.

In particular, this system provides that the conveyor belts 110 and 120 comprise respective hollow seats 111 and 121 and that the terracotta dishes comprise bushes 126 arranged to fit in the seats 111 and 121. In particular, the bushes 126 are made of Teflon or PVC resistant at a temperature higher than 500°C.

## Claims

1. An apparatus (100) for the automated production of panigacci, said apparatus (100) comprising:
- at least a first conveyor belt (110) arranged to rotate about a first plurality of rollers (119), said first conveyor belt (110) comprising a first outer surface and a first plurality of terracotta dishes (115), each terracotta dish (115) of said first plurality being constrained to said first outer surface;
- at least a second conveyor belt (120) arranged to rotate about a second plurality of rollers (129), said second conveyor belt (120) comprising a second outer surface and a second plurality of terracotta dishes (125), each terracotta dish (125) of said second plurality being constrained to said second outer surface;
- an oven (130) arranged to be crossed by said first conveyor belt (110) and by said second conveyor belt (120) for heating said first and said second plurality of terracotta dishes (115,125);
- a doser (140) arranged to pour a dose of batter on at least one terracotta dish (115) of said first plurality;
said apparatus (100) comprising an area of cooking (150), external to said oven (130), wherein a portion of length *L* of said first conveyor belt (110) and a portion of length *L* of said second conveyor belt (120) are constantly at a mutual distance equal to a predetermined value *D*, said apparatus (100) being configured in such a way that in said area of cooking (150) each terracotta dish (115) of said first plurality is aligned with a corresponding terracotta dish (125) of said second plurality, said predetermined value *D* being such that a dose of batter interposed between two terracotta dishes (115,125) aligned to each other is subject to a pressure *P* in such a way to allow its squeezing and cooking.

2. The apparatus (100) for the automated production of panigacci, according to claim 1, wherein said terracotta dishes (115) of said first plurality and said terracotta dishes (125) of said second plurality are constrained, respectively, to said first outer surface and to said second outer surface in a removable way.

3. The apparatus (100) for the automated production of panigacci, according to claim 1, wherein said terracotta dishes (115) of said first plurality and said terracotta dishes (125) of said second plurality are constrained, respectively, to said first outer surface and to said second outer surface by means of springs having elastic constant *k*.

4. The apparatus (100) for the automated production of panigacci, according to claim 1, wherein said doser (140) is adapted to pour a dose of batter on at least one terracotta dish (115) of said first plurality at an area of pouring arranged at the entrance of said area of cooking (150).

5. The apparatus (100) for the automated production of panigacci, according to claim 1, wherein a kneading machine (160) is also provided arranged to prepare the batter and comprising dispensers (161) of water, salt and flour.

6. The apparatus (100) for the automated production of panigacci, according to claim 1, wherein a first brush (117) and a second brush (127) are provided arranged to clean, respectively, the terracotta dishes (115) of said first plurality and the terracotta dishes (125) of said second plurality exiting from said area of cooking (150).

7. The apparatus (100) for the automated production of panigacci, according to claim 1, wherein a freezer (170) is provided arranged to freeze the panigacci (50) exiting from said area of cooking (150).

8. The apparatus (100) for the automated production of panigacci, according to claim 1, wherein said oven (130) is an infrared gas oven.

## Patentansprüche

1. Vorrichtung (100) zur automatisierten Herstellung von Panigacci, wobei die Vorrichtung (100) Folgendes umfasst:
- zumindest ein erstes Förderband (110), das angeordnet ist, um sich um eine erste Vielzahl von Rollen (119) zu drehen, wobei das erste Förderband (110) eine erste Außenfläche und eine erste Vielzahl von Terrakotta-Schalen (115) umfasst, wobei jede Terrakotta-Schale (115) der ersten Vielzahl auf die erste Außenfläche beschränkt ist;
- zumindest ein zweites Förderband (120), das angeordnet ist, um sich um eine zweite Vielzahl von Rollen (129) zu drehen, wobei das zweite Förderband (120) eine zweite Außenfläche und eine zweite Vielzahl von Terrakotta-Schalen (125) umfasst, wobei jede Terrakotta-Schale (125) der zweiten Vielzahl auf die zweite Außenfläche beschränkt ist;
- einen Ofen (130), der angeordnet ist, um von dem ersten Förderband (110) und von dem zweiten Förderband (120) gekreuzt zu werden, um die erste und die zweite Vielzahl von Terrakotta-Schalen (115, 125) zu erhitzen;
- einen Dosierer (140), der angeordnet ist, um eine Portion Teig auf zumindest eine Terrakotta-Schale (115) der ersten Vielzahl zu gießen;
wobei die Vorrichtung (100) einen Kochbereich (150) außerhalb des Ofens (130) umfasst, wobei ein Abschnitt der Länge *L* des ersten Förderbandes (110) und ein Abschnitt der Länge *L* des zweiten Förderbandes (120) konstant in einem gegenseitigen Abstand gleich einem vorbestimmten Wert *D* sind, wobei die Vorrichtung (100) auf eine solche Weise konfiguriert ist, dass in dem Kochbereich (150) jede Terrakotta-Schale (115) der ersten Vielzahl auf eine entsprechende Terrakotta-Schale (125) der zweiten Vielzahl ausgerichtet ist, wobei der vorbestimmte Wert *D* derart ist, dass eine Portion Teig, die zwischen zwei Terrakotta-Schalen (115, 125) eingefügt ist, die aufeinander ausgerichtet sind, auf eine solche Weise einem Druck *P* ausgesetzt ist, dass sie zusammengedrückt und gekocht werden kann.

2. Vorrichtung (100) zur automatisierten Herstellung von Panigacci nach Anspruch 1, wobei die Terrakotta-Schalen (115) der ersten Vielzahl und die Terrakotta-Schalen (125) der zweiten Vielzahl auf eine entfernbare Weise jeweils auf die erste Außenfläche und auf die zweite Außenfläche beschränkt sind.

3. Vorrichtung (100) zur automatisierten Herstellung von Panigacci nach Anspruch 1, wobei die Terrakotta-Schalen (115) der ersten Vielzahl und die Terrakotta-Schalen (125) der zweiten Vielzahl mittels Federn, die Elastizitätskonstante k aufweisen, jeweils auf die erste Außenfläche und auf die zweite Außenfläche beschränkt sind.

4. Vorrichtung (100) zur automatisierten Herstellung von Panigacci nach Anspruch 1, wobei der Dosierer (140) ausgelegt ist, um eine Portion Teig auf zumindest eine Terrakotta-Schale (115) der ersten Vielzahl in einem Gießbereich zu gießen, der an dem Eingang des Kochbereichs (150) angeordnet ist.

5. Vorrichtung (100) zur automatisierten Herstellung von Panigacci nach Anspruch 1, wobei auch eine Knetmaschine (160) bereitgestellt ist, die angeordnet ist, um den Teig zuzubereiten, und Spender (161) für Wasser, Salz und Mehl umfasst.

6. Vorrichtung (100) zur automatisierten Herstellung von Panigacci nach Anspruch 1, wobei eine erste Bürste (117) und eine zweite Bürste (127) bereitgestellt sind, die angeordnet sind, um jeweils die Terrakotta-Schalen (115) der ersten Vielzahl und die Terrakotta-Schalen (125) der zweiten Vielzahl zu reinigen, die aus dem Kochbereich (150) austreten.

7. Vorrichtung (100) zur automatisierten Herstellung von Panigacci nach Anspruch 1, wobei ein Gefriergerät (170) bereitgestellt ist, das angeordnet ist, um die Panigacci (50) einzufrieren, die aus dem Kochbereich (150) austreten.

8. Vorrichtung (100) zur automatisierten Herstellung von Panigacci nach Anspruch 1, wobei der Ofen (130) ein Infrarot-Gasofen ist.

## Revendications

1. Appareil (100) destiné à la production automatisée de panigacci, ledit appareil (100) comprenant :
- au moins une première courroie transporteuse (110) agencée pour tourner autour d'une première pluralité de rouleaux (119), ladite première courroie transporteuse (110) comprenant une première surface externe et une première pluralité de plats en terre cuite (115), chaque plat en terre cuite (115) de ladite première pluralité étant contraint sur ladite première surface externe ;
- au moins une seconde courroie transporteuse (120) agencée pour tourner autour d'une seconde pluralité de rouleaux (129), ladite seconde courroie transporteuse (120) comprenant une seconde surface externe et une seconde pluralité de plats en terre cuite (125), chaque plat en terre cuite (125) de ladite seconde pluralité étant contrainte sur ladite seconde surface externe ;
- un four (130) agencé pour être traversé par ladite première courroie transporteuse (110) et par ladite seconde courroie transporteuse (120) pour chauffer ladite première et ladite seconde pluralité de plats en terre cuite (115, 125) ;
- un doseur (140) agencé pour verser une dose de pâte sur au moins un plat en terre cuite (115) de ladite première pluralité ;
ledit appareil (100) comprenant une zone de cuisson
(150), à l'extérieur dudit four (130), une partie de la longueur L de ladite première courroie transporteuse (110) et une partie de la longueur L de ladite seconde courroie transporteuse (120) étant constamment à une distance mutuelle égale à une valeur prédéfinie D, ledit appareil (100) étant conçu d'une façon telle que dans ladite zone de cuisson (150) chaque plat en terre cuite (115) de ladite première pluralité est aligné avec un plat en terre cuite correspondant (125) de ladite seconde pluralité, ladite valeur prédéfinie D étant de sorte qu'une dose de pâte intercalée entre deux plats en terre cuite (115, 125) alignés l'un par rapport à l'autre est soumise à une pression P d'une façon telle que cela permet son essorage et sa cuisson.

2. Appareil (100) destiné à la production automatisée de panigacci, selon la revendication 1, lesdits plats en terre cuite (115) de ladite première pluralité et lesdits plats en terre cuite (125) de ladite seconde pluralité étant contraints, respectivement, sur ladite première surface externe et sur ladite seconde surface externe de manière amovible.

3. Appareil (100) destiné à la production automatisée de panigacci, selon la revendication 1, lesdits plats en terre cuite (115) de ladite première pluralité et lesdits plats en terre cuite (125) de ladite seconde pluralité étant contraints, respectivement, sur ladite première surface externe et sur ladite seconde surface externe au moyen de ressorts possédant une
constante d'élasticité k.

4. Appareil (100) destiné à la production automatisée de panigacci, selon la revendication 1, ledit doseur (140) étant adapté pour verser une dose de pâte sur au moins un plat en terre cuite (115) de ladite première pluralité au niveau d'une zone de versement agencée à l'entrée de ladite zone de cuisson (150).

5. Appareil (100) destiné à la production automatisée de panigacci, selon la revendication 1, un pétrin (160) étant également prévu agencé pour préparer la pâte et comprenant des distributeurs (161) d'eau, de sel et de farine.

6. Appareil (100) destiné à la production automatisée de panigacci, selon la revendication 1, une première brosse (117) et une seconde brosse (127) étant prévues agencées pour nettoyer, respectivement, les plats en terre cuite (115) de ladite première pluralité et les plats en terre cuite (125) de ladite seconde pluralité sortant de ladite zone de cuisson (150).

7. Appareil (100) destiné à la production automatisée de panigacci, selon la revendication 1, un congélateur (170) étant prévu agencé pour congeler les panigacci (50) sortant de ladite zone de cuisson (150).

8. Appareil (100) destiné à la production automatisée de panigacci, selon la revendication 1, ledit four (130) étant un four à gaz infrarouge.
